# EUROPÄISCHE PATENTSCHRIFT

(11) **EP 2 607 195 B1**
(45) Veröffentlichungstag und Bekanntmachung des Hinweises auf die Patenterteilung: **11.11.2020**
(21) Anmeldenummer: 12006337.5
(22) Anmeldetag: 08.09.2012
(51) Int. Cl.: B60T 17/04, B60T 13/66, B60T 17/22, B60R 16/023, B60D 1/62, B62D 63/08, H02J 9/06, H02J 7/00

(54) **Energieversorgung eines Nutzfahrzeuganhängers**
Energy supply of a commercial vehicle trailer
Alimentation en énergie d'une remorque de véhicule utilitaire

(30) Priorität: 20.12.2011 DE 102011121577
(43) Veröffentlichungstag der Anmeldung: 26.06.2013
(73) Patentinhaber: WABCO GmbH, 30453 Hannover (DE)
(72) Erfinder: Nils, Canditt, 30457 Hannover (DE); Ronnenberg, Udo, 30900 Wedemark (DE); Stender, Axel, 31787 Hameln (DE)

(56) Entgegenhaltungen:
- DE-A1- 3 703 639
- DE-A1- 3 907 762
- DE-A1- 10 053 584
- DE-A1- 10 244 298
- DE-A1-102005 013 440
- US-A1- 2005 029 859

## Beschreibung

Die Erfindung betrifft eine Anordnung aus einem elektronischen Steuergerät einer elektrisch gesteuerten Bremsanlage und/oder Niveauregelungsanlage eines Nutzfahrzeuganhängers und einer Energieversorgungseinrichtung des Nutzfahrzeuganhängers gemäß dem Anspruch 1. Außerdem betrifft die Erfindung einen Nutzfahrzeuganhänger gemäß Anspruch 18, ein elektronisches Steuergerät gemäß Anspruch 19 und eine Energieversorgungseinrichtung gemäß Anspruch 20.

Allgemein betrifft die Erfindung das Gebiet von Nutzfahrzeuganhängern mit elektronisch gesteuerten Systemen, insbesondere mit einer durch ein elektronisches Steuergerät elektrisch gesteuerten Bremsanlage. Die elektrische Energieversorgung eines solchen elektronischen Steuergerätes und der mit dem Steuergerät verbundenen elektrischen Komponenten erfolgt über eine elektrische Steckverbindung des Nutzfahrzeuganhängers, über die eine elektrische Verbindung zu einem Zugfahrzeug des Nutzfahrzeuganhängers hergestellt wird. Über die Steckverbindung werden die elektrischen Komponenten des Nutzfahrzeuganhängers mit der elektrischen Anlage des Zugfahrzeuges, insbesondere der Fahrzeugbatterie, verbunden. Eine elektrische Energieversorgung und damit ein Betrieb des elektronischen Steuergeräts und der damit verbundenen Komponenten ist allerdings nur möglich, wenn die elektrische Steckverbindung im Zugfahrzeug eingesteckt ist. Bei einem einzeln abgestellten Nutzfahrzeuganhänger fehlt es daher an einer elektrischen Energieversorgung.

Es ist ferner bekannt, eine Bremslichtleitung des Zugfahrzeugs zur elektrischen Versorgung der elektrischen Komponenten des Nutzfahrzeuganhängers zu verwenden. In diesem Fall sind die elektrischen Komponenten nur dann mit elektrischer Energie versorgt, wenn im Zugfahrzeug das Bremspedal betätigt wird.

Es gibt bei Nutzfahrzeuganhängern aber Situationen, in denen eine elektrische Energieversorgung auch bei einzeln abgestelltem Nutzfahrzeuganhänger erwünscht ist, z.B. wenn durch das elektronische Steuergerät auch die Niveauregelungsfunktion einer Luftfederungsanlage gesteuert wird. In diesem Fall ist es erwünscht, dass die Niveaulage manuell auch bei einzeln ohne Zugfahrzeug abgestelltem Nutzfahrzeuganhänger verändert werden kann. Hierfür ist allerdings eine elektrische Energieversorgung erforderlich. Daher gibt es bereits Vorschläge, in einem Nutzfahrzeuganhänger eine eigene Batterie einzubauen. Da die Batterie nicht permanent elektrische Energie an das elektronische Steuergerät des Nutzfahrzeuganhängers abgeben soll, war bisher ein von einer Bedienperson manuell zu betätigender Ein-/Aus-Schalter vorgesehen, der bei Bedarf zu betätigen war. Zum Aufladen musste die Batterie des Nutzfahrzeuganhängers an ein übliches, externes Batterieladegerät angeschlossen werden.

Die vorbekannten Lösungen hatten den Nachteil, dass ein erhöhter Aufwand für die manuelle Bedienung des Ein-/Aus-Schalters und für das Aufladen der Batterie erforderlich war. Es kam öfter vor, dass die Batterie bei einzeln abgestelltem Nutzfahrzeuganhänger versehentlich nicht wieder abgeschaltet wurde, was dazu führte, dass sie relativ schnell entleert war und zu einem späteren Zeitpunkt, wenn eine elektrische Energieversorgung gebraucht wurde, wegen leerer Batterie nicht zur Verfügung stand. Auch bei korrekter Handhabung des Ein-/Aus-Schalters war es bisher erforderlich, den Ladezustand der Batterie zu überwachen und bei Bedarf ein externes Batterieladegerät anzuschließen.

DE 37 03 639 A1 offenbart eine elektro-pneumatische Bremsanlage für Zugfahrzeuge, die mit pneumatisch und/oder elektrisch steuerbaren Bremseinrichtungen aufweisenden Anhängern kuppelbar sind, weist einen mit einem Druckluftspeicher in Verbindung stehenden Vorratskupplungskopf zum Anschließen einer Vorratsleitung zur Anhängerbremseinrichtung, einem Bremskupplungskopf zum Anschließen einer pneumatischen Bremsleitung zur Anhängerbremseinrichtung, einen elektrischen Anschlußstecker zum Anschließen einer elektrischen Bremsleitung zur Anhängerbremseinrichtung und eine Notbremsauslosevorrichtung auf, die im Falle von Bremsleitungsunterbrechungen durch bei Bremspedalbetätigung generierte elektrische und/oder pneumatische Bremssignale aktivierbar ist. Damit die Notbremsauslosevorrichtung ein auf den jeweiligen Typ der angeschlossenen Anhängerbremseinrichtung abgestimmtes Notbremsprogramm startet, sind mit Anhängerankupplung aktivierbare Mittel vorgesehen, welche die Anhängerbremseinrichtung als pneumatisch und/oder elektrisch steuerbar ausweisende Kennsignale generieren.

US 2005/0029859 A1 offenbart eine Bremsanlage für Zugfahrzeuge.

DE 100 53 584 A1 offenbart eine redundante Spannungsversorgung für mindestens einen sicherheitsrelevanten Verbraucher in einem Kraftfahrzeug, umfassend eine im Bordnetz angeordnete erste Spannungsversorgung und eine zweite Spannungsversorgung, wobei die erste und zweite Spannungsversorgung über ein Entkopplungselement verbunden sind, wobei das Entkopplungselement einen gerichteten Stromfluß von der ersten zur zweiten Spannungsversorgung gewährleistet, wobei die erste Spannungsversorgung über ein zweites Entkopplungselement und die zweite Spannungsversorgung über ein drittes Entkopplungselement mit dem sicherheitsrelevanten Verbraucher verbunden sind, wobei die Entkopplungselemente einen gerichteten Stromfluß von den Spannungsversorgungen zu dem sicherheitsrelevanten Verbraucher gewährleistet.

DE 39 07 762 A1 offenbart eine Bremsanlage mit einer elektrisch steuerbaren Bremseinrichtung eines Anhängers, dessen Steuergerät über Leitungen an eine elektrische Energiequelle eines Zugfahrzeugs angeschlossen ist. Beim Bremsen werden elektrische Strome solcher Größe hervorgerufen, die in langen Leitungen derart starke Spannungsabfälle zur Folge haben, da die Funktionssicherheit der Bremseinrichtung gefährdet sein kann. Die Bremseinrichtung hat daher einen im Anhänger angeordneten elektrischen Energiespeicher, welcher durch die Energiequelle des Zugfahrzeugs ladbar und bei Ansteuerung der Bremseinrichtung des Anhängers entladbar ist. Spannungsabfälle in den relativ kurzen Leitungen zwischen dem Energiespeicher und dem Steuergerät sind daher gering. Die Leitungen zwischen der elektrischen Energiequelle des Zugfahrzeugs und dem Energiespeicher des Anhängers sind nur mit kleinen Ladeströmen belastet. Der Spannungsabfall ist daher trotz großer Leitungslänge gering.

Der Erfindung liegt die Aufgabe zugrunde, eine vereinfachte Handhabung der im Nutzfahrzeuganhänger installierten Steuersysteme zu ermöglichen.

Diese Aufgabe wird gemäß Anspruch 1 gelöst durch Anordnung aus einem elektronischen Steuergerät einer elektrisch gesteuerten Bremsanlage und/oder Niveauregelungsanlage eines Nutzfahrzeuganhängers und einer

Energieversorgungseinrichtung des Nutzfahrzeuganhängers zur Versorgung elektrischer Komponenten des Nutzfahrzeuganhängers mit elektrischer Energie, wobei die Energieversorgungseinrichtung dazu eingerichtet ist, mit dem Nutzfahrzeuganhänger mitgeführt zu werden, wobei das elektronische Steuergerät in einem ersten Betriebsmodus dazu eingerichtet ist, über einen Energieversorgungseingangsanschluss des elektronischen Steuergeräts über eine elektrische Steckverbindung des Nutzfahrzeuganhängers, die zum Anschluss an ein Zugfahrzeug des Nutzfahrzeuganhängers ausgebildet ist, mit elektrischer Versorgungsenergie versorgt zu werden und über wenigstens einen Energieversorgungsausgangsanschluss des elektronischen Steuergeräts die Energieversorgungseinrichtung mit zu deren Betrieb erforderlicher elektrischer Versorgungsenergie zu versorgen, dadurch gekennzeichnet, dass das elektronische Steuergerät in einem zweiten Betriebsmodus dazu eingerichtet ist, von der Energieversorgungseinrichtung aus einer mit dem Nutzfahrzeuganhänger mitgeführten Batterie bereitgestellte elektrische Versorgungsenergie über den Energieversorgungsausgangsanschluss aufzunehmen, um das elektronische Steuergerät bzw. die mit dem Steuergerät verbundenen elektrischen Komponenten mit zu deren Betrieb erforderlicher elektrischer Versorgungsenergie zu versorgen.

Die Erfindung hat den Vorteil, dass der bisherige manuelle Ein-/AusSchalter entfallen kann. Dies vereinfacht die elektrische Anlage und die Verkabelung. Zudem wird die Bedienung einfacher, da der manuell zu betätigende Schalter nicht mehr fehlbedient werden kann. Ein weiterer Vorteil ist, dass ein- und derselbe Anschluss des elektronischen Steuergeräts, nämlich der Energieversorgungsausgangsanschluss, auch zugleich für die Einspeisung elektrischer Versorgungsenergie verwendet werden kann, wenn die Versorgung des elektronischen Steuergeräts bzw. der mit dem Steuergerät verbundenen elektrischen Komponenten aus der Energieversorgungseinrichtung erfolgt. Hierdurch kann die Zahl der erforderlichen Anschlüsse an dem elektronischen Steuergerät reduziert werden bzw. eine eventuelle Doppelbelegung vorhandener Anschlüsse wie dem Bremslichteingang kann vermieden werden. Der Bremslichteingang kann dann allein für den ihm zugedachten Zweck, nämlich dem Anschluss des Bremslichtsignals vom Zugfahrzeug, verwendet werden. Andernfalls ggf. erforderliche Entkopplungsschaltungen über Dioden können entfallen. Auch hierdurch kann die elektrische Anlage und die Verkabelung weiter vereinfacht werden.

Der Energieversorgungseingangsanschluss kann zum Anschluss an wenigstens eine Leitung der elektrischen Steckverbindung des Nutzfahrzeuganhängers eingerichtet sein bzw. daran angeschlossen sein, die zum Anschluss an das Zugfahrzeug des Nutzfahrzeuganhängers ausgebildet ist, wobei die Leitung elektrische Versorgungsenergie vom Zugfahrzeug zum Nutzfahrzeuganhänger überträgt.

Die Energieversorgungseinrichtung kann das elektronische Steuergerät bzw. die mit dem Steuergerät verbundenen elektrischen Komponenten mit zu deren Betrieb erforderlicher elektrischer Versorgungsenergie z.B. aus einer mit dem Nutzfahrzeuganhänger mitgeführten Batterie versorgen.

Die Erfindung eignet sich damit insbesondere für Nutzfahrzeuganhänger, die zum beladen oder Entladen vom Zugfahrzeug abgekoppelt werden, weil das Zugfahrzeug simultan dazu Be- oder Entladen werden soll. Dies ist z.B. bei Deichselanhängern regelmäßig der Fall. Somit können die elektrischen Komponenten des Nutzfahrzeuganhängers nach dem Abkoppeln vom Zugfahrzeug automatisch weiter mit elektrischer Energie aus der Batterie versorgt werden, so dass z.B. die manuellen Bedienelemente der elektrisch gesteuerten Niveauregelung ohne Einschränkung weiter zur manuellen Vorgabe eines gewünschten Niveaulage, z.B. an einer Laderampe, benutzt werden können, ohne dass eine besondere Aufmerksamkeit oder Aktivität des Anwenders erforderlich ist, um die Betriebsfähigkeit zu gewährleisten.

An dem Energieversorgungseingangsanschluss kann z.B. die Dauerplusleitung der elektrischen Steckverbindung des Nutzfahrzeuganhängers, d.h. Klemme 30, angeschlossen werden. Die Batterie kann als wiederaufladbare Batterie (Akkumulator) oder als nicht wiederaufladbare Batterie für eine Einmalverwendung ausgebildet sein.

Gemäß einer vorteilhaften Weiterbildung der Erfindung wird eine Anordnung mit den weiteren Merkmalen vorgeschlagen:
a) die Energieversorgungseinrichtung weist wenigstens einen elektrischen Versorgungsausgangsanschluss auf, der zur Verbindung mit dem Energieversorgungsausgangsanschluss des elektronischen Steuergeräts eingerichtet ist,
b) die Energieversorgungseinrichtung weist wenigstens einen elektrischen Versorgungseingangsanschluss auf, der zur Verbindung mit dem Energieversorgungsausgangsanschluss des elektronischen Steuergeräts eingerichtet ist, wobei die Energieversorgungseinrichtung zur Überwachung der über den Versorgungseingangsanschluss zugeführten elektrischen Versorgungsenergie eingerichtet ist,
c) die Energieversorgungseinrichtung weist wenigstens einen Batterieanschluss auf, der zur Verbindung mit wenigstens einem Anschlusspol einer mit dem Nutzfahrzeuganhänger mitgeführten Batterie eingerichtet ist,
d) die Energieversorgungseinrichtung ist dazu eingerichtet, das Steuergerät bzw. die mit dem Steuergerät verbundenen elektrischen Komponenten automatisch erst dann über den Versorgungsausgangsanschluss mit über den Batterieanschluss aus der Batterie entnommener elektrischer Versorgungsenergie zu versorgen, wenn die Überwachung der über den Versorgungseingangsanschluss zugeführten elektrischen Versorgungsenergie die Erfüllung wenigstens eines vorbestimmten ersten Überwachungskriteriums ergibt.

Dies hat den Vorteil, dass die Benutzung der Anlage weiter vereinfacht wird. Der entfallene manuell zu betätigende Schalter kann nicht mehr fehlbedient werden. Stattdessen ist eine Energieversorgungseinrichtung vorgesehen, die selbstständig die über den Versorgungseingangsanschluss zugeführte elektrische Versorgungsenergie überwacht und erforderlichenfalls automatisch eine elektrische Versorgung des Steuergeräts bzw. der mit dem Steuergerät verbundenen elektrischen Komponenten aus der Batterie heraus vornimmt. Damit wird aus der Batterie nur elektrische Energie entnommen, wenn dies auch erforderlich ist.

Gemäß einer vorteilhaften Weiterbildung der Erfindung ist die Energieversorgungseinrichtung dazu eingerichtet, nach Ablauf einer vorbestimmten Nachlaufzeit automatisch das Steuergerät bzw. die mit dem Steuergerät verbundenen elektrischen Komponenten nicht weiter mit über den Batterieanschluss aus der Batterie entnommener elektrischer Versorgungsenergie zu versorgen, wobei die Nachlaufzeit beginnt, wenn die Überwachung der über den Versorgungseingangsanschluss zugeführten elektrischen Versorgungsenergie die Erfüllung des vorbestimmten ersten Überwachungskriteriums ergibt. Dies hat den Vorteil, dass eine Entleerung der Batterie vermieden wird. Dies erfolgt wiederum automatisch, so dass der Anwender sich darum nicht kümmern muss und ein eventuelles Vergessen des Abschaltens vermeiden wird. So schaltet die Energieversorgungseinrichtung die Energieversorgung der elektrischen Komponenten des Nutzfahrzeuganhängers nach dem Abkoppeln vom Zugfahrzeug sofort automatisch auf die Batterie um, hält die Energieversorgung aus der Batterie aber nur für die vorbestimme Nachlaufzeit aufrecht, um eine Entleerung der Batterie zu vermeiden. Daher steht die Batterie auch danach auf Anforderung sofort wieder für eine Energieversorgung zur Verfügung. Die vorbestimmte Nachlaufzeit kann z.B. eine Stunde betragen. Die vorbestimmte Nachlaufzeit kann z.B. durch die Energieversorgungseinrichtung, das elektronische Steuergerät und/oder eine andere Elektronik, z.B. einen Zeitgeber, gesteuert werden. Sofern die vorbestimmte Nachlaufzeit durch das elektronische Steuergerät oder eine andere Elektronik gesteuert wird, teilt das elektronische Steuergerät bzw. die andere Elektronik der Energieversorgungseinrichtung den Ablauf der Nachlaufzeit mit, z.B. durch ein über eine Datenverbindung oder eine sonstige Leitung übertragenes Signal.

Gemäß einer vorteilhaften Weiterbildung der Erfindung ist die Energieversorgungseinrichtung dazu eingerichtet, das Steuergerät bzw. die mit dem Steuergerät verbundenen elektrischen Komponenten automatisch nicht über den Versorgungsausgangsanschluss mit über den Batterieanschluss aus der Batterie entnommener elektrischer Versorgungsenergie zu versorgen, wenn die Überwachung der über den Versorgungseingangsanschluss zugeführten elektrischen Versorgungsenergie die Nichterfüllung des vorbestimmten ersten Überwachungskriteriums oder die Erfüllung eines zweiten Überwachungskriteriums ergibt. In solchen Fällen erfolgt die elektrische Versorgung nicht mehr aus der Batterie, so dass das Steuergerät und die mit dem Steuergerät verbundenen elektrischen Komponenten entweder abgeschaltet werden oder auf einem anderen Weg, z.B. über den Versorgungseingangsanschluss oder eine Bremslichtversorgung versorgt werden. Als erstes Überwachungskriterium kann z.B. die Unterschreitung eines bestimmten Grenzwertes des über den Versorgungseingangsanschluss zugeführten Spannungspotentials ausgewertet werden. Als zweites Überwachungskriterium kann z.B. die Überschreitung eines bestimmten weiteren Grenzwertes des über den Versorgungseingangsanschluss zugeführten Spannungspotentials ausgewertet werden, wobei hier ein etwas höherer Grenzwert verwendet werden kann als bei dem ersten Überwachungskriterium. Hierdurch kann eine gewisse Umschalthystherese realisiert werden.

Gemäß einer vorteilhaften Weiterbildung der Erfindung weist die Energieversorgungseinrichtung folgende Merkmale auf:
a) die Energieversorgungseinrichtung weist wenigstens einen Steuereingangsanschluss auf, über den der Energieversorgungseinrichtung Aktivierungssignale zuführbar sind, wobei die Energieversorgungseinrichtung zur Überwachung der über den Steuereingangsanschluss zugeführten Aktivierungssignale eingerichtet ist,
b) die Energieversorgungseinrichtung ist dazu eingerichtet, das Steuergerät bzw. die mit dem Steuergerät verbundenen elektrischen Komponenten automatisch erst dann über den Versorgungsausgangsanschluss mit über den Batterieanschluss aus der Batterie entnommener elektrischer Versorgungsenergie zu versorgen, wenn die Überwachung der über den Versorgungseingangsanschluss zugeführten elektrischen Versorgungsenergie die Erfüllung wenigstens eines vorbestimmten ersten Überwachungskriteriums ergibt und die Überwachung des Steuereingangsanschlusses das Vorliegen wenigstens eines vorbestimmten ersten Aktivierungssignals ergibt.

Durch zusätzliche Berücksichtigung von Aktivierungssignalen an einem Steuereingangsanschluss kann die aktuelle Betriebssituation des Nutzfahrzeuganhängers berücksichtigt werden. Das vorbestimmte erste Aktivierungssignal kann z.B. eine Information über den Einschaltzustand des Zündungsschalters des Zugfahrzeugs enthalten, so dass die Energieversorgungseinrichtung erkennen kann, ob das Zugfahrzeug aktiv in Betrieb ist (Zündung an) oder nicht (Zündung aus). Bei an das Zugfahrzeug angekoppeltem Nutzfahrzeuganhänger ist eine elektrische Energieversorgung der elektrischen Komponenten des Nutzfahrzeuganhängers im Allgemeinen nur erforderlich, wenn im Zugfahrzeug die Zündung eingeschaltet ist. Im Ergebnis wird die Batterie damit nicht unbeabsichtigt mit dem elektronischen Steuergerät verbunden. An dem Steuereingangsanschluss kann z.B. die über die Zündung geschaltete Plusleitung der elektrischen Steckverbindung, d.h. Klemme 15, angeschlossen werden. Das vorbestimmte erste Aktivierungssignal kann dann z.B. das Vorhandensein des Pluspotentials an der Klemme 15 sein oder die Überschreitung eines bestimmten Spannungspotentials.

Gemäß einer vorteilhaften Weiterbildung der Erfindung ist die Energieversorgungseinrichtung dazu eingerichtet, das Steuergerät bzw. die mit dem Steuergerät verbundenen elektrischen Komponenten automatisch nicht über den Versorgungsausgangsanschluss mit über den Batterieanschluss aus der Batterie entnommener elektrischer Versorgungsenergie zu versorgen, wenn die Überwachung des Steuereingangsanschlusses das Nichtvorliegen des vorbestimmten ersten Aktivierungssignals ergibt.

Gemäß einer vorteilhaften Weiterbildung der Erfindung weist die Energieversorgungseinrichtung zusätzlich wenigstens einen Zusatzanschluss auf, über den der Energieversorgungseinrichtung Energieanforderungssignale zuführbar sind, wobei die Energieversorgungseinrichtung zur Überwachung der über den Zusatzanschluss zugeführten Energieanforderungssignale eingerichtet ist, und wobei die Energieversorgungseinrichtung dazu eingerichtet ist, automatisch das Steuergerät bzw. die mit dem Steuergerät verbundenen elektrischen Komponenten über den Versorgungsausgangsanschluss mit über den Batterieanschluss aus der Batterie entnommener elektrischer Versorgungsenergie zu versorgen, wenn die Überwachung des Zusatzanschlusses das Vorliegen wenigstens eines vorbestimmten ersten Energieanforderungssignals ergibt. Dies hat den Vorteil, dass weitere Eingangsgrößen in das Management der Energieversorgung des elektronischen Steuergeräts und der damit verbundenen elektrischen Komponenten einbezogen werden können. Es kann dabei ein Zusatzanschluss oder ggf. auch mehrere Zusatzanschlüsse mit der zuvor angegebenen Funktionalität vorgesehen sein. Die Energieversorgungseinrichtung kann z.B. kombiniert mit einem Erweiterungsmodul des elektronischen Steuergeräts ausgebildet sein, das zusätzliche Eingangs- und Ausgangsanschlüsse zum Anschluss weiterer Komponenten des Nutzfahrzeuganhängers aufweist. In diesem Fall können Eingangsanschlüsse des Erweiterungsmoduls zugleich als Zusatzanschluss zur Zuführung von Energieanforderungssignalen verwendet werden. Der Zusatzanschluss kann auch als CAN-Schnittstelle ausgebildet sein oder eine CAN-Schnittstelle aufweisen. In diesem Fall ist die CAN-Schnittstelle eingerichtet zur Datenkommunikation mit dem elektronischen Steuergerät der elektrisch gesteuerten Bremsanlage und/oder Niveauregelungsanlage des Nutzfahrzeuganhängers und/oder einer Steuerelektronik des Zugfahrzeuges. Die CAN-Schnittstelle kann insbesondere als CAN-Schnittstelle für die Beleuchtungsanlage und die Lichtsteuerung des Nutzfahrzeuganhängers ausgebildet sein. Die Energieversorgungseinrichtung kann auch eine oder mehrere weitere CAN-Schnittstellen aufweisen, z.B. eine CAN-Schnittstelle für die Lichtsteuerung und eine CAN-Schnittstelle für die Datenkommunikation mit dem elektronischen Steuergerät der elektrisch gesteuerten Bremsanlage des Nutzfahrzeuganhängers. Dies hat den Vorteil, dass über den Zusatzanschluss eine Art Aufweckfunktion des elektronischen Steuergerätes der elektrisch gesteuerten Bremsanlage realisiert werden kann, indem ein vorbestimmtes erstes Energieanforderungssignal zugeführt wird.

Der Zusatzanschluss kann auch als Bedienelementanschluss ausgebildet sein oder einen Bedienelementanschluss aufweisen. Der Bedienelementanschluss ist zur Verbindung mit einem manuellen Bedienelement, z.B. einem Taster, eingerichtet. Dies hat den Vorteil, dass durch manuelle Bedienung des Bedienelementes die elektrische Versorgung des elektronischen Steuergerätes sowie der damit verbundenen elektrischen Komponenten aus der Batterie aktiviert werden kann. Dies ist insbesondere bei separat abgestelltem Anhängefahrzeug von Vorteil, wenn nach Ablauf der Nachlaufzeit z.B. eine Niveauregelungsfunktion betätigt werden soll.

Gemäß einer vorteilhaften Weiterbildung der Erfindung ist die Energieversorgungseinrichtung dazu eingerichtet, nach Ablauf einer vorbestimmten Zusatzzeit automatisch das Steuergerät bzw. die mit dem Steuergerät verbundenen elektrischen Komponenten nicht mit über den Batterieanschluss aus der Batterie entnommener elektrischer Versorgungsenergie zu versorgen. Dies hat den Vorteil, dass z.B. über das Bedienelement eine temporäre Einschaltung und Versorgung aus der Batterie angefordert werden kann, wobei sichergestellt ist, dass nach der vorbestimmten Zusatzzeit auch automatisch die Versorgung aus der Batterie wieder beendet wird. Hierdurch wird ein versehentliches Vergessen des Abschaltens der Batterieversorgung vermieden. Dies hat den Vorteil, dass ein versehentliches starkes Entladen der Batterie vermieden wird. Es kann z.B. vorgesehen sein, dass durch einmaliges Erzeugen eines vorbestimmten ersten Energieanforderungssignals, z.B. einmalige Betätigung des Bedienelementes, eine einmalige elektrische Versorgung für die vorbestimmte Zusatzzeit erfolgt. Bei nochmaligem Erzeugen des Energieanforderungssignals vor Ablauf der vorbestimmten Zusatzzeit kann die vorbestimmte Zusatzzeit erhöht werden, z.B. verdoppelt. Durch nochmaliges und weiteres Erzeugen von vorbestimmten ersten Energieanforderungssignalen kann in gleicher Weise die vorbestimmte Zusatzzeit entsprechend vervielfacht werden. Die vorbestimmte Zusatzzeit kann z.B. eine Stunde betragen. Die vorbestimmte Zusatzzeit kann z.B. eine Stunde betragen. Die vorbestimmte Zusatzzeit kann z.B. durch die Energieversorgungseinrichtung, das elektronische Steuergerät und/oder eine andere Elektronik, z.B. einen Zeitgeber, gesteuert werden. Sofern die vorbestimmte Zusatzzeit durch das elektronische Steuergerät oder eine andere Elektronik gesteuert wird, teilt das elektronische Steuergerät bzw. die andere Elektronik der Energieversorgungseinrichtung den Ablauf der Zusatzzeit mit, z.B. durch ein über eine Datenverbindung oder eine sonstige Leitung übertragenes Signal.

Gemäß einer vorteilhaften Weiterbildung der Erfindung beendet die Energieversorgungseinrichtung die Versorgung des Steuergerätes bzw. der mit dem Steuergerät verbundenen elektrischen Komponenten mit über den Batterieanschluss aus der Batterie entnommener elektrischer Versorgungsenergie, wenn über den Zusatzanschluss ein Abschaltanforderungssignal empfangen wird. Das Abschaltanforderungssignal kann z.B. durch eine lang anhaltende Betätigung des Bedienelementes erzeugt werden, oder durch das elektronische Steuergerät zur Signalisierung, dass es keine elektrische Versorgung mehr benötigt. Dies hat den Vorteil, dass auch schon vor Ablauf der Nachlaufzeit oder der Zusatzzeit die elektrische Versorgung aus der Batterie beendet werden kann, so dass die Batterie nicht unnötig entladen wird und geschont wird.

Der Versorgungseingangsanschluss und der Versorgungsausgangsanschluss der Energieversorgungseinrichtung können als separate, voneinander getrennte Anschlüsse ausgebildet sein. Gemäß einer vorteilhaften Weiterbildung der Erfindung ist der Versorgungseingangsanschluss mit dem Versorgungsausgangsanschluss zusammengeschaltet oder als der gleiche Anschluss ausgebildet. Dies hat den Vorteil, dass nur ein elektrischer Anschluss hierfür an der Energieversorgungseinrichtung erforderlich ist. Wenn die Energieversorgungseinrichtung nicht direkt mit der elektrischen Steckverbindung des Nutzfahrzeuganhängers verbunden ist, sondern indirekt über das in diesem Fall dazwischen geschaltete elektronische Steuergerät der elektrisch gesteuerten Bremsanlage und/oder Niveauregelungsanlage des Nutzfahrzeuganhängers, ist ein weiterer Vorteil, dass auch nur ein elektrischer Anschluss des elektronischen Steuergerätes für die Verbindung mit dem Versorgungseingangsanschluss und dem Versorgungsausgangsanschluss der Energieversorgungseinrichtung erforderlich ist. Hierdurch kann die Zahl der erforderlichen Anschlüsse und damit Steckkontakte an dem elektronischen Steuergerät minimiert werden. Dies vereinfacht die elektrische Verkabelung, reduziert die Anzahl der Kabel und die damit verbundenen Kosten.

Die Energieversorgungseinrichtung kann als separates Gerät ausgebildet sein. Gemäß einer vorteilhaften Weiterbildung der Erfindung ist die Energieversorgungseinrichtung baulich in die Batterie, in das elektronische Steuergerät, in einen Bremsdruckmodulator oder in ein Eingangs- und Ausgangs-Erweiterungsmodul des elektronischen Steuergeräts integriert. Dies hat den Vorteil, dass kein zusätzliches Gerät im Nutzfahrzeuganhänger montiert und elektrisch verkabelt werden muss. Hierdurch vereinfacht sich der Aufwand für die Verkabelung. Zudem kann die Herstellung der Energieversorgungseinrichtung kostengünstiger erfolgen. Die Energieversorgungseinrichtung und die Batterie können auch in anderer Weise baulich vereinigt sein, z.B. indem die Batterie in die Energieversorgungseinrichtung baulich integriert ist. Hierdurch ergibt sich ein kompakterer Aufbau der erforderlichen Komponenten.

Das elektronische Steuergerät kann insbesondere Teil eines Bremsdruckmodulators sein, der als mechatronische Einheit ausgebildet ist und neben den elektronischen Komponenten z.B. Magnetventile aufweist.

Die Energieversorgungseinrichtung weist für die Zuschaltung und Abschaltung der aus der Batterie entnommenen elektrischen Versorgungsenergie interne Schaltelemente auf, z.B. elektromechanische Schalter oder Halbleiterschalter. Die Energieversorgungseinrichtung weist zur Steuerung der Schaltelemente eine Steuerungselektronik auf, die z.B. mit einem Mikroprozessor ausgebildet sein kann.

Gemäß einer vorteilhaften Weiterbildung der Erfindung weist die Energieversorgungseinrichtung wenigstens ein Überspannungsschutzbauteil auf, das an den Versorgungseingangsanschluss angeschlossen ist und dazu eingerichtet ist, die elektronischen Komponenten der Energieversorgungseinrichtung vor Überspannungspulsen aus der elektrischen Anlage des Zugfahrzeuges zu schützen, insbesondere vor durch den Generator erzeugten Überspannungspulsen. Das Überspannungsschutzbauteil kann z.B. als Suppressor-Diode ausgebildet sein.

Gemäß einer vorteilhaften Weiterbildung der Erfindung weist die Energieversorgungseinrichtung eine Batterieladeschaltung auf, wobei die Energieversorgungseinrichtung dazu eingerichtet ist, die Batterie über die an dem Versorgungseingangsanschluss empfangene elektrische Versorgungsenergie mittels der Batterieladeschaltung zu laden, wenn wenigstens ein vorbestimmtes Ladekriterium erfüllt ist. Dies hat den Vorteil, dass die Energieversorgungseinrichtung automatisch für eine Batterieladung sorgt, so dass der Anwender sich darum nicht kümmern muss. Die Ladung der Batterie kann automatisch über die an dem Versorgungseingangsanschluss empfangene elektrische Versorgungsenergie erfolgen, was den Vorteil hat, dass kein gesondertes Batterieladegerät oder Netzgerät angeschlossen werden muss. Vielmehr kann die Aufladung der Batterie sozusagen nebenbei im Betrieb des Nutzfahrzeuganhängers erfolgen, ohne dass hierfür besondere Vorkehrungen durch den Anwender getroffen werden müssen. Die Batterieladeschaltung kann als separates Zusatzmodul der Energieversorgungseinrichtung ausgebildet sein oder baulich in die Energieversorgungseinrichtung integriert sein. Das vorbestimmte Ladekriterium kann z.B. die Überschreitung eines bestimmten Wertes des über den Versorgungseingangsanschluss zugeführten Spannungspotentials sein. Das Laden der Batterie kann automatisch beendet werden, wenn ein bestimmter Ladezustand der Batterie erkannt wird, z.B. Vollladung. Das Laden der Batterie kann auch dann beendet werden, wenn das über den Versorgungseingangsanschluss zugeführte Spannungspotential einen bestimmten Wert unterschreitet. Zusätzlich kann das Ladekriterium berücksichtigen, dass der Ladezustand der Batterie einen gewissen Mindestwert unterschreitet. Das Ladekriterium ist dann erfüllt, wenn das über den Versorgungseingangsanschluss zugeführte Spannungspotential einen bestimmten Wert überschreitet und der Ladezustand der Batterie einen gewissen Mindestwert unterschreitet.

Gemäß einer vorteilhaften Weiterbildung der Erfindung ist das elektronische Steuergerät elektrisch zwischen die elektrische Steckverbindung des Nutzfahrzeuganhängers, die zum Anschluss an das Zugfahrzeug des Nutzfahrzeuganhängers ausgebildet ist, und der Energieversorgungseinrichtung geschaltet, wobei die Energieversorgungseinrichtung mit wenigstens einer Leitung der elektrischen Steckverbindung, die elektrische Versorgungsenergie vom Zugfahrzeug zum Nutzfahrzeuganhänger überträgt, mittelbar über den Energieversorgungsausgangsanschluss des elektronischen Steuergeräts verbunden ist. Dies hat den Vorteil, dass dem elektronischen Steuergerät unmittelbar die von der elektrischen Steckverbindung des Nutzfahrzeuganhängers bereitgestellten elektrischen Größen zur Verfügung stehen. Daher können Sicherheitsmaßnahmen, die für eine sichere Weiterversorgung des elektronischen Steuergeräts auch bei einem Defekt an der Energieversorgungseinrichtung erforderlich sind, mit geringerem Aufwand realisiert werden. Insbesondere würde bei einem Ausfall der Energieversorgungseinrichtung die Versorgung des elektronischen Steuergeräts von der elektrischen Steckverbindung des Nutzfahrzeuganhängers weiterhin sichergestellt sein und nur die Versorgung aus der Batterie ggf. entfallen.

Gemäß einer vorteilhaften Weiterbildung der Erfindung ist vorgesehen, dass der Energieversorgungsausgangsanschluss des elektronischen Steuergeräts über wenigstens ein in dem elektronischen Steuergerät angeordnetes elektronisches Halbleiterbauelement mit dem Energieversorgungseingangsanschluss des elektronischen Steuergeräts abschaltbar verbunden ist, wobei die Verbindung durch das Halbleiterbauelement oder ein anderes abschaltbares Schaltungsbauelement des elektronischen Steuergeräts abschaltbar ist. Die Abschaltbarkeit der elektrischen Verbindung erlaubt bei Bedarf eine Potentialtrennung zwischen den Energieversorgungseinrichtung und der elektrischen Steckverbindung des Nutzfahrzeuganhängers.

Gemäß einer vorteilhaften Weiterbildung der Erfindung ist vorgesehen, dass der Energieversorgungsausgangsanschluss des elektronischen Steuergeräts zum Einspeisen elektrischer Versorgungsenergie von der Energieversorgungseinrichtung in das elektronische Steuergerät über das Halbleiterbauelement, das andere abschaltbare Schaltungsbauelement oder ein anderes Bauelement mit Diodenfunktion auch bei abgeschaltetem Halbleiterbauelement oder anderem abschaltbaren Schaltungsbauelement eingerichtet ist, um das Steuergerät bzw. die mit dem Steuergerät verbundenen elektrischen Komponenten mit elektrischer Versorgungsenergie zu versorgen. Dies hat den Vorteil, dass das elektronische Steuergerät jederzeit, auch wenn das Halbleiterbauelement oder andere abschaltbare Schaltungsbauelement abgeschaltet ist, über die Energieversorgungseinrichtung mit elektrischer Energie versorgt werden kann. Damit kann das elektronische Steuergerät aus einem nicht-energieversorgten Zustand, in dem das Halbleiterbauelement oder andere abschaltbare Schaltungsbauelement naturgemäß abgeschaltet ist, trotzdem über die Energieversorgungseinrichtung mit elektrischer Energie versorgt werden. Ein weiterer Vorteil ist, dass der Stromfluss von dem elektronischen Steuergerät zu der Energieversorgungseinrichtung und der umgekehrte Stromfluss von der Energieversorgungseinrichtung zu dem elektronischen Steuergerät über denselben Anschluss des elektronischen Steuergeräts erfolgen kann, so dass am elektronischen Steuergerät elektrische Anschlüsse gespart werden.

Die Aufgabe wird ferner gelöst durch einen Nutzfahrzeuganhänger mit einer Anordnung der zuvor beschriebenen Art, wie im Anspruch 18 angegeben.

Die Aufgabe wird ferner gelöst durch ein elektronisches Steuergerät der zuvor beschriebenen Art, wie im Anspruch 19 angegeben.

Die Aufgabe wird ferner gelöst durch eine Energieversorgungseinrichtung der zuvor beschriebenen Art, wie im Anspruch 20 angegeben.

Die Erfindung wird nachfolgend anhand von Ausführungsbeispielen unter Verwendung von Zeichnungen näher erläutert.

Es zeigen:
- Figur 1 -: einen Nutzfahrzeuganhänger mit einer Energieversorgungseinrichtung in einer ersten Ausführungsform und
- Figur 2 -: einen Nutzfahrzeuganhänger mit einer Energieversorgungseinrichtung gemäß einer zweiten Ausführungsform und
- Figur 3 -: eine Anordnung mit einem elektronischen Steuergerät und einer Energieversorgungseinrichtung gemäß einer dritten Ausführungsform.

In den Figuren werden gleiche Bezugszeichen für einander entsprechende Elemente verwendet.

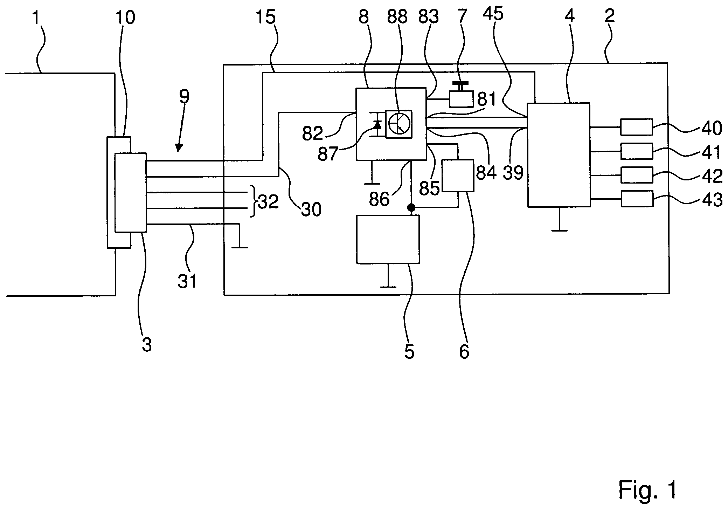

Anhand der Figur 1, die eine nicht beanspruchte, aber dennoch vorteilhafte Ausführungsform zeigt, sei zunächst die grundsätzliche Funktion einer mit einer Energieversorgungseinrichtung ausgestatteten elektrischen Anlage eines Nutzfahrzeuganhängers erläutert.

Die Figur 1 zeigt in schematischer Darstellung einen mit einem Zugfahrzeug 1 verbundenen Nutzfahrzeuganhänger 2. Hierbei sind lediglich die für die Beschreibung der Erfindung relevanten elektrischen Komponenten dargestellt. Das Zugfahrzeug 1 weist eine elektrische Kupplung 10 auf, in die eine elektrische Steckverbindung 3 des Nutzfahrzeuganhängers 2 eingesteckt ist. Die elektrische Steckverbindung 3 ist mit einer Mehrzahl von elektrischen Leitungen bzw. Kabeln verbunden, die als Kabelstrang 9 zu dem Nutzfahrzeuganhänger 2 geführt sind und dort mit elektrischen Komponenten verbunden sind. Der Kabelstrang 9 kann z.B. Leitungen gemäß ISO 7638 aufweisen. Für die weitere Beschreibung der Erfindung sei hierbei insbesondere auf folgende Leitungen eingegangen:
- Leitung 15:: Verbindung zur Klemme 15 des Zugfahrzeugs, d.h. zur Plusleitung, die über die Zündung geschaltet wird.
- Leitung 30:: Verbindung zur Klemme 30 des Zugfahrzeugs, d.h. zum Dauerplus.
- Leitung 31:: Verbindung zur Fahrzeugmasse bzw. zur Klemme 31 des Zugfahrzeugs.

Die zusätzlich dargestellten Leitungen 32 können verschiedene Funktionen haben, z.B. eine Datenverbindung oder weitere Energieversorgungsleitungen.

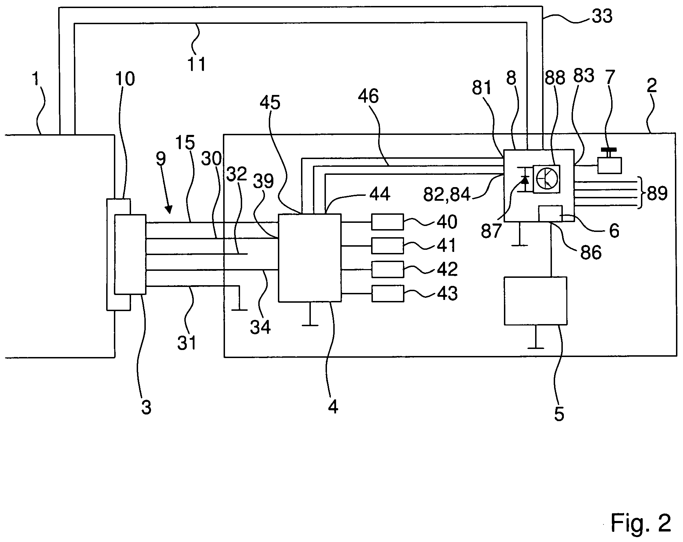

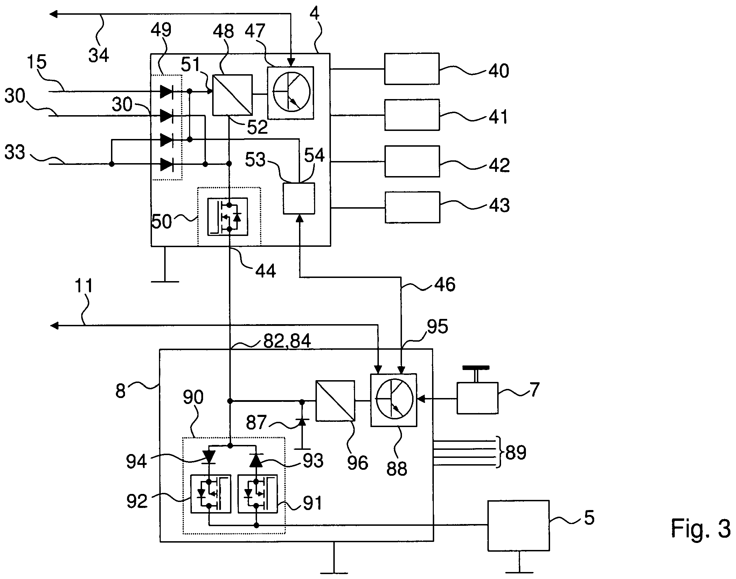

In den Figuren 2 und 3 wird noch auf folgende Leitungen Bezug genommen:
- Leitung 33:: Bremslichtsignal vom Zugfahrzeug.
- Leitung 34:: Datenverbindung zwischen dem Zugfahrzeug 1 und dem Anhängefahrzeug 2. Es kann sich insbesondere um eine erste CAN-Datenverbindung handeln. In diesem Fall ist die Leitung 34 als ein Paar von zwei Leitungen (CAN-H und CAN-L) ausgebildet.

Der Nutzfahrzeuganhänger 2 gemäß Figur 1 weist eine elektrische Energieversorgungseinrichtung 8, ein elektronisches Steuergerät 4 einer elektrisch gesteuerten Bremsanlage und/oder Niveauregelungsanlage des Nutzfahrzeuganhängers 2, eine Batterie 5 sowie eine Ladeschaltung 6 auf. Erkennbar ist außerdem ein manuelles Bedienelement 7 in Form eines Tasters, das ebenfalls an dem Nutzfahrzeuganhänger 2 angeordnet ist. Die Energieversorgungseinrichtung 8 weist einen Steuereingangsanschluss 81 auf, der mit einem Steuerausgangsanschluss 45 des elektronischen Steuergeräts 4 verbunden ist. Die Energieversorgungseinrichtung 8 weist einen Versorgungseingangsanschluss 82 auf, der mit der Leitung 30 verbunden ist. Die Energieversorgungseinrichtung 8 weist einen Versorgungsausgangsanschluss 84 auf, der über eine elektrische Leitung mit einem Energieversorgungseingangsanschluss 39 des elektronischen Steuergeräts 4 verbunden ist. Die Energieversorgungseinrichtung 8 weist einen Batterieanschluss 86 auf, der über eine elektrische Leitung mit der Batterie 5 verbunden ist. Die Energieversorgungseinrichtung 8 weist einen Ladeausgangsanschluss 85 auf, der mit einer Ladeschaltung 6 verbunden ist. Die Ladeschaltung 6 ist ebenfalls mit der Batterie 5 verbunden. Die Energieversorgungseinrichtung 8 weist einen Zusatzanschluss 83 auf, der über eine elektrische Leitung mit dem Bedienelement 7 verbunden ist. Die Energieversorgungseinrichtung 8 weist interne elektronische Bauelemente auf, die als Steuerelektronik 88 in der Figur 1 und den übrigen Figuren wiedergegeben sind. Zum Schutz der Steuerelektronik 88 ist ein Überspannungsschutzbauelement 87 vorgesehen, das der Steuerelektronik 88 vorgeschaltet ist bzw. einer Spannungswandlerschaltung der Steuerelektronik 88.

Das elektronische Steuergerät 4 kann Teil eines Bremsdruckmodulators sein. Das elektronische Steuergerät 4 ist mit elektrischen Komponenten 40, 41, 42, 43 der Bremsanlage und ggf. einer Niveauregelungsanlage verbunden. Die Komponenten 40, 41, 42, 43 können z.B. elektrisch betätigbare Magnetventile, Lampen oder Sensoren sein. Das elektronische Steuergerät 4 ist außerdem mit der Leitung 15 verbunden. Das elektronische Steuergerät 4 gibt das über die Leitung 15 empfangene Spannungssignal, ggf. modifiziert, an dem Steuerausgangsanschluss 45 an die Energieversorgungseinrichtung 8 aus.

Die Energieversorgungseinrichtung 8, die Batterie 5 und das elektronische Steuergerät 4 sind über jeweils eine eigene Masseleitung mit der Leitung 31 und damit mit der Fahrzeugmasse des Zugfahrzeugs verbunden.

Die Energieversorgungseinrichtung 8 wertet die über den Steuereingangsanschluss 81 zugeführten Spannungssignale aus und prüft, ob das vorbestimmte erste Aktivierungssignal vorliegt. Sendet das elektronische Steuergerät 4 das vorbestimmte erste Aktivierungssignal an die Energieversorgungseinrichtung 8 und unterschreitet zugleich die über die Leitung 30 zugeführte Spannung einen bestimmten Grenzwert, verbindet die Energieversorgungseinrichtung 8 über den Batterieanschluss 86 und den Versorgungsausgangsanschluss 84 die Batterie 5 mit dem elektronischen Steuergerät 4, so dass das elektronische Steuergerät 4 aus der Batterie 5 mit elektrischer Energie versorgt wird. Von diesem Zeitpunkt an wird eine Nachlaufzeit überwacht, während der die Energieversorgung aus der Batterie 5 aufrechterhalten wird. Sobald die Nachlaufzeit abgelaufen ist, unterbricht die Energieversorgungseinrichtung 8 die elektrische Energieversorgung des elektronischen Steuergeräts 4 aus der Batterie 5. Die Nachlaufzeit kann z.B. eine Stunde dauern. Die Nachlaufzeit kann entweder durch die Energieversorgungseinrichtung 8 oder durch das elektronische Steuergerät 4 überwacht werden. Es ist auch möglich, dass die Nachlaufzeit sowohl durch die Energieversorgungseinrichtung 8 als auch durch das elektronische Steuergerät 4 überwacht wird. Sofern die Nachlaufzeit durch das elektronische Steuergerät 4 überwacht wird, sendet dieses nach Ablauf der Nachlaufzeit über den Steuerausgangsanschluss 45 der Energieversorgungseinrichtung 8, dass diese die Energieversorgung aus der Batterie 5 abschalten soll. Die Energieversorgungseinrichtung 8 schaltet daraufhin die Energieversorgung aus der Batterie 5 ab.

Zusätzlich wird während dieser Zeit der Batterieladezustand der Batterie 5 überwacht. Wird dabei festgestellt, dass die Batterie 5 entladen ist, wird zur Schonung und zum Schutz der Batterie 5, ggf. auch vor Ende der Nachlaufzeit, die elektrische Versorgung des elektronischen Steuergeräts 4 aus der Batterie 5 durch die Energieversorgungseinrichtung 8 beendet. Die Energieversorgungseinrichtung 8 beendet auch dann, ggf. vor Ablauf der Nachlaufzeit, die Versorgung des elektronischen Steuergeräts 4 aus der Batterie 5, wenn das vorbestimmte erste Aktivierungssignal an dem Steuereingang 81 nicht mehr vorliegt. Auf diese Weise kann auch das elektronische Steuergerät 4 sich aktiv von der elektrischen Versorgung aus der Batterie 5 abschalten, wenn z.B. bestimmte abschließende Regelungsvorgänge durchgeführt sind.

Bei Erkennung einer Betätigung des Bedienelementes 7 verbindet die Energieversorgungseinrichtung 8 das elektronische Steuergerät 4 für eine vorbestimmte Zusatzzeit mit der Batterie 5. Durch mehrmaliges Betätigen des Bedienelementes 7 kann die vorbestimmte Zusatzzeit in Schritten erhöht werden, z.B. bei zweimaligem Betätigen verdoppelt und bei dreimaligem Betätigen verdreifacht werden. Pro Betätigung kann z.B. eine Zusatzzeit von einer Stunde vorgesehen sein. Durch ein durchgehendes langes Betätigen des Bedienelementes 7 kann die Energieversorgungseinrichtung 8 dazu veranlasst werden, die Versorgung des elektronischen Steuergeräts 4 und der daran angeschlossenen elektrischen Komponenten aus der Batterie 5 abzuschalten. Die Zusatzzeit kann entweder durch die Energieversorgungseinrichtung 8 oder durch das elektronische Steuergerät 4 überwacht werden. Es ist auch möglich, dass die Zusatzzeit sowohl durch die Energieversorgungseinrichtung 8 als auch durch das elektronische Steuergerät 4 überwacht wird. Sofern die Zusatzzeit durch das elektronische Steuergerät 4 überwacht wird, sendet dieses nach Ablauf der Zusatzzeit über den Steuerausgangsanschluss 45 der Energieversorgungseinrichtung 8, dass diese die Energieversorgung aus der Batterie 5 abschalten soll. Die Energieversorgungseinrichtung 8 schaltet daraufhin die Energieversorgung aus der Batterie 5 ab. Das elektronische Steuergerät 4 erhält dabei eine Information über die Betätigung des Bedienelementes 7 von der Energieversorgungseinrichtung 8 z.B. über eine Datenverbindung, z.B. die nachfolgend noch erläuterte zweite CAN-Datenverbindung 46.

Sofern die Energieversorgungseinrichtung 8 feststellt, dass die über die Leitung 30 zugeführte elektrische Versorgungsenergie eine ausreichend hohe Spannung aufweist, um für die Aufladung der Batterie 5 geeignet zu sein und zusätzlich der Ladezustand der Batterie 5 ein Aufladen erfordert, gibt die Energieversorgungseinrichtung 8 über den Ladeausgangsanschluss 85 eine aus der über den Versorgungseingangsanschluss 82 empfangenen elektrischen Versorgungsenergie gewonnene elektrische Energie an die Ladeschaltung 6 ab. Die Ladeschaltung 6 bewirkt dann eine Aufladung der Batterie 5. Die Ladeschaltung 6 kann in einer einfachen Realisierung z.B. als Widerstand ausgebildet sein. Die Ladeschaltung 6 kann auch eine elektronisch gesteuerte Ladeschaltung sein, z.B. eine mikroprozessorgesteuerte Ladeschaltung, die eine Aufladung der Batterie 5 nach vorbestimmten Ladeverfahren durchführt.

Die zuvor erläuterten Funktionen können auch vorteilhaft in den nachfolgend dargestellten beanspruchten Ausführungsformen gemäß den Figuren 2 und 3 vorgesehen sein.

Die Figur 2 zeigt eine zweite Ausführungsform der Energieversorgungseinrichtung 8 sowie des elektronischen Steuergeräts 4, wobei diese Elemente in anderer Art miteinander verschaltet sind als in der Ausführungsform gemäß Figur 1. Hierbei ist die Energieversorgungseinrichtung 8 von der elektrischen Steckverbindung 3 aus betrachtet elektrisch sozusagen hinter dem elektronischen Steuergerät 4 angeordnet. Die elektrische Steckverbindung 3 sowie der Kabelstrang 9 weisen die zuvor erläuterten Leitungen 15, 30, 33, 34 auf. Hierbei sind alle vier Leitungen 15, 30, 33, 34 direkt mit dem elektronischen Steuergerät 4 verbunden. Von einem Steuerausgangsanschluss 45 des elektronischen Steuergeräts 4 geht, wie bei der Ausführungsform gemäß Figur 1, eine elektrische Leitung zum Steuereingangsanschluss 81 der Energieversorgungseinrichtung 8. Über diese Verbindung kann das elektronische Steuergerät 4 wiederum Aktivierungssignale an die Energieversorgungseinrichtung 8 übermitteln. Ferner ist das elektronische Steuergerät 4 über eine zweite CAN-Datenverbindung 46, z.B. realisiert durch eine Zweidrahtleitung, mit der Energieversorgungseinrichtung 8 zum Datenaustausch verbunden. Für die Übertragung der elektrischen Versorgungsenergie ist der Versorgungseingangsanschluss 82 der Energieversorgungseinrichtung 8 mit einem Energieversorgungsausgangsanschluss 44 des elektronischen Steuergeräts 4 verbunden. Über den Energieversorgungsausgangsanschluss 44 stellt das elektronische Steuergerät 4 der Energieversorgungseinrichtung 8 elektrische Versorgungsenergie bereit, die die elektronische Steuereinrichtung 4 der über die Leitung 30, ggf. auch der Leitung 15, übertragenen elektrischen Energie entnimmt. Die Energieversorgungseinrichtung 8 lädt über die am Versorgungseingangsanschluss 82 empfangene elektrische Energie bei Bedarf die Batterie 5 über die Ladeschaltung 6 auf. Gemäß Figur 2 ist beispielhaft dargestellt, dass die Ladeschaltung 6 in die Energieversorgungseinrichtung 8 baulich integriert ist. In diesem Falle ist nur der eine Batterieanschluss 86 für die Verbindung mit der Batterie 5 erforderlich. Dieser dient sowohl für die Entnahme elektrischer Energie aus der Batterie 5 als auch für die Zuführung elektrischer Energie zu der Batterie 5 beim Laden.

In der Figur 2 ist dargestellt, dass die Energieversorgungseinrichtung 8 über eine dritte CAN-Datenverbindung 11 zusätzlich mit dem Zugfahrzeug 1 verbunden ist. Die dritte Datenverbindung 11 kann z.B. ein CAN-Datenbus für die Lichtsteuerung sein, der über einen Beleuchtungssteckverbinder mit dem Zugfahrzeug 1 verbunden ist. In einer vorteilhaften Ausgestaltung ist die Energieversorgungseinrichtung 8 dazu eingerichtet, einige oder alle Botschaften, die die Energieversorgungseinrichtung 8 über die dritte CAN-Datenverbindung 11 empfängt, über die zweite CAN-Datenverbindung 46 an das elektronische Steuergerät 4 weiterzuleiten. Dies hat den Vorteil, dass das elektronische Steuergerät 4 auch Informationen über die Beleuchtungssteuerung erhält, die ggf. für die Optimierung von Regelungsvorgängen, z.B. bei einer Bremsung, verwendet werden können.

Die Energieversorgungseinrichtung 8 kann baulich vereint mit einem Eingangs- und Ausgangs-Erweiterungsmodul des elektronischen Steuergeräts 4 ausgebildet sein. In diesem Fall weist die Energieversorgungseinrichtung 8 weitere Anschlüsse 89 auf, die in der Figur 2 symbolisch dargestellt sind. An die Anschlüsse 89 können z.B. Sensoren, Schalter oder Aktoren, wie z.B. Magnetventile, angeschlossen werden. Die Energieversorgungseinrichtung 8 ist dazu eingerichtet, über die zweite CAN-Datenverbindung 46 Daten, die über als Eingänge verwendete Anschlüsse 89 empfangen werden, zu dem elektronischen Steuergerät 4 zu übermitteln und von dem elektronischen Steuergerät 4 über die zweite CAN-Datenverbindung 46 empfangene Betätigungsdaten als Betätigungssignale über als Ausgang verwendete Anschlüsse 89 an daran angeschlossene Aktoren auszugeben.

Die Figur 3 zeigt eine weitere Ausführungsform einer elektronischen Steuereinrichtung 4 und einer damit verbundenen Energieversorgungseinrichtung 8, wobei diese wiederum an einem Nutzfahrzeuganhänger 2 angeordnet sind. Die Energieversorgungseinrichtung 8 ist mit dem elektronischen Steuergerät 4 und der Batterie 5 sowie mit dem Bedienelement 7 in gleicher Weise verbunden wie zuvor bezüglich Figur 2 erläutert. Die Figur 3 zeigt zusätzlich eine in dem elektronischen Steuergerät 4 vorgesehene Spannungswandlerschaltung 48, die zur Versorgung einer internen Steuerelektronik 47 des elektronischen Steuergeräts 4 dient. Durch die Spannungswandlerschaltung 48 wird beispielsweise eine Eingangsspannung von 24V, wie sie im Nutzfahrzeugbereich verwendet wird, auf einen für Digitalbausteine üblichen 5V-Pegel gewandelt. Das elektronische Steuergerät 4 ist über eine mit mehreren Dioden versehene Eingangsschaltung 49 mit den Leitungen 15, 30 und 33 verbunden. Erkennbar ist, dass über jeweils eine Diode sowohl die über die Leitung 15 zugeführte Spannung als auch die über die Leitung 33 zugeführte Spannung einen Steueranschluss 51 der Spannungswandlerschaltung 48 zugeführt werden. Der Steueranschluss 51 dient zum Steuern der Spannungswandlerschaltung 48, d.h. zum Ein- und Ausschalten der von der Spannungswandlerschaltung 48 an die Steuerelektronik 47 abgegebenen Spannung. Durch die Spannungswandlerschaltung 48 wird dann die Steuerelektronik 47 mit elektrischer Energie versorgt, wenn entweder die Zündung des Zugfahrzeugs eingeschaltet ist, d.h. die Leitung 15 Spannung führt, oder das Bremspedal betätigt ist, d.h. ein Bremslichtsignal über die Leitung 33 übertragen wird. Über jeweils eine weitere Diode der Eingangsschaltung 49 ist sowohl die an der Leitung 30 anliegende Spannung als auch die an der Leitung 33 anliegende Spannung einerseits einem Energieversorgungsanschluss 52 der Spannungswandlerschaltung 48 und andererseits einer Ausgangsstufe 50 des elektronischen Steuergeräts 4 zugeführt. Die Spannungswandlerschaltung 48 erzeugt aus der am Energieversorgungsanschluss 52 anstehenden Spannung die elektrische Versorgungsspannung der Steuerelektronik 47, wenn am Steueranschluss 51 das entsprechende Signal anliegt.

Die Ausgangsstufe 50 des elektronischen Steuergeräts 4 ist mit dem Energieversorgungsausgangsanschluss 44 verbunden. In einem ersten Betriebsmodus versorgt das elektronische Steuergerät 4 über den Energieversorgungsausgangsanschluss 44 die Energieversorgungseinrichtung 8 mit elektrischer Energie aus den über die Leitungen 30 bzw. 33 zugeführten elektrischen Energien. Die Ausgangsstufe 50 kann z.B. einen Halbleiterschalter in Form eines Feldeffekttransistors enthalten, durch den die Ausgangsstufe 50 bzw. der Energieversorgungsausgangsschluss 44 bei Bedarf auch abschaltbar ist. In einem zweiten Betriebsmodus dient der Energieversorgungsausgangsanschluss 44 zugleich zur Aufnahme von elektrischer Energie von der Energieversorgungseinrichtung 8. Hierbei kann die Ausgangsstufe 50 sozusagen in umgekehrter Richtung betrieben werden, auch wenn der Halbleiterschalter abgeschaltet ist. Über eine in die Ausgangsstufe 50 integrierte Reversediode kann elektrische Energie über den Energieversorgungsausgangsanschluss 44 sozusagen rückwärts in das elektronische Steuergerät 4 eingespeist werden.

Die Energieversorgungseinrichtung 8 weist eine eigene Spannungswandlerschaltung 92 auf, die die gleiche Funktion hat wie die Spannungswandlerschaltung 48 des elektronischen Steuergeräts 4. Über die Spannungswandlerschaltung 92 wird die Steuerelektronik 88 der Energieversorgungseinrichtung 8 mit einer für Digitalbauteile geeigneten Spannung versorgt. Die Energieversorgungseinrichtung 8 weist eine Steuerschaltung 90 auf, mit der die Energieentnahme aus der Batterie 5 sowie die Aufladung der Batterie 5 gesteuert werden kann. Hierzu weist die Steuerschaltung 90 zwei Schaltungszweige auf. Ein zum Laden der Batterie 5 dienender Schaltungszweig weist einen mit einer Diode 94 in Reihe geschalteten ersten Halbleiterschalter 92 auf. Ein für die Energieentnahme aus der Batterie 5 vorgesehener Schaltungszweig weist einen mit einer Diode 93 in Reihe geschalteten zweiten Halbleiterschalter 91 auf. Die beiden Schaltungszweige sind miteinander parallel geschaltet, wobei die Dioden 93, 94 entgegengesetzt angeordnet sind, d.h. antiparallel geschaltet sind. Die Halbleiterschalter 91, 92 werden über die Steuerelektronik 88 gesteuert. Der für die Aufladung der Batterie 5 vorgesehene Schaltungszweig mit den Bauelementen 82, 94 stellt dabei die Ladeschaltung dar.

Wie ferner erkennbar ist, ist das an den Steueranschluss 51 der Spannungswandlerschaltung 48 des elektronischen Steuergeräts 4 geführte Spannungssignal zugleich an eine Schaltung 53 geführt, die mit der zweiten CAN-Datenverbindung 46 in Verbindung steht. Die Schaltung 53 ist dazu eingerichtet, das an ihrem Eingangsanschluss 54 anstehende Spannungssignal in eine CAN-Datenbotschaft zu integrieren und damit als Datensignal über die zweite CAN-Datenverbindung 46 an die Steuerelektronik 88 der Energieversorgungseinrichtung 8 zu übermitteln. Auf diese Weise kann auch über die CAN-Datenverbindung 46 die Information, ob das elektronische Steuergerät 4 aus der Batterie 5 mit elektrischer Energie versorgt werden soll oder nicht, an die Energieversorgungseinrichtung 8 übermittelt werden. Hierdurch wird ein redundanter Datenübermittlungspfad geschaffen.

## Patentansprüche

1. Anordnung aus einem elektronischen Steuergerät (4) einer elektrisch gesteuerten Bremsanlage und/oder Niveauregelungsanlage eines Nutzfahrzeuganhängers (2) und einer Energieversorgungseinrichtung (8) des Nutzfahrzeuganhängers (2) zur Versorgung elektrischer Komponenten (40, 41 ,42, 43) des Nutzfahrzeuganhängers (2) mit elektrischer Energie, wobei die Energieversorgungseinrichtung (8) dazu eingerichtet ist, mit dem Nutzfahrzeuganhänger (2) mitgeführt zu werden, wobei das elektronische Steuergerät (4) in einem ersten Betriebsmodus dazu eingerichtet ist, über einen Energieversorgungseingangsanschluss (39) des elektronischen Steuergeräts (4) über eine elektrische Steckverbindung (3) des Nutzfahrzeuganhängers (2), die zum Anschluss an ein Zugfahrzeug (1) des Nutzfahrzeuganhängers (2) ausgebildet ist, mit elektrischer Versorgungsenergie versorgt zu werden und über wenigstens einen Energieversorgungsausgangsanschluss (44) des elektronischen Steuergeräts (4) die Energieversorgungseinrichtung (8) mit zu deren Betrieb erforderlicher elektrischer Versorgungsenergie zu versorgen, **dadurch gekennzeichnet, dass** das elektronische Steuergerät (4) in einem zweiten Betriebsmodus dazu eingerichtet ist, von der Energieversorgungseinrichtung (8) aus einer mit dem Nutzfahrzeuganhänger (2) mitgeführten Batterie (5) bereitgestellte elektrische Versorgungsenergie über den Energieversorgungsausgangsanschluss (44) aufzunehmen, um das elektronische Steuergerät (4) bzw. die mit dem Steuergerät verbundenen elektrischen Komponenten (40, 41 ,42, 43) mit zu deren Betrieb erforderlicher elektrischer Versorgungsenergie zu versorgen.

2. Anordnung nach Anspruch 1 mit den Merkmalen:
a) die Energieversorgungseinrichtung (8) weist wenigstens einen elektrischen Versorgungsausgangsanschluss (84) auf, der zur Verbindung mit dem Energieversorgungsausgangsanschluss (44) des elektronischen Steuergeräts (4) eingerichtet ist,
b) die Energieversorgungseinrichtung (8) weist wenigstens einen elektrischen Versorgungseingangsanschluss (82) auf, der zur Verbindung mit dem Energieversorgungsausgangsanschluss (44) des elektronischen Steuergeräts (4) eingerichtet ist, wobei die Energieversorgungseinrichtung (8) zur Überwachung der über den Versorgungseingangsanschluss (82) zugeführten elektrischen Versorgungsenergie eingerichtet ist,
c) die Energieversorgungseinrichtung (8) weist wenigstens einen Batterieanschluss (86) auf, der zur Verbindung mit wenigstens einem Anschlusspol einer mit dem Nutzfahrzeuganhänger (2) mitgeführten Batterie (5) eingerichtet ist,
d) die Energieversorgungseinrichtung (8) ist dazu eingerichtet, das Steuergerät (4) bzw. die mit dem Steuergerät verbundenen elektrischen Komponenten (40, 41, 42, 43) automatisch erst dann über den Versorgungsausgangsanschluss (84) mit über den Batterieanschluss (86) aus der Batterie (5) entnommener elektrischer Versorgungsenergie zu versorgen, wenn die Überwachung der über den Versorgungseingangsanschluss (82) zugeführten elektrischen Versorgungsenergie die Erfüllung wenigstens eines vorbestimmten ersten Überwachungskriteriums ergibt.

3. Anordnung nach Anspruch 2, **dadurch gekennzeichnet, dass** die Energieversorgungseinrichtung (8) dazu eingerichtet ist, nach Ablauf einer vorbestimmten Nachlaufzeit automatisch das Steuergerät (4) bzw. die mit dem Steuergerät (4) verbundenen elektrischen Komponenten (40, 41, 42, 43) nicht weiter mit über den Batterieanschluss (86) aus der Batterie (5) entnommener elektrischer Versorgungsenergie zu versorgen, wobei die Nachlaufzeit beginnt, wenn die Überwachung der über den Versorgungseingangsanschluss (82) zugeführten elektrischen Versorgungsenergie die Erfüllung des vorbestimmten ersten Überwachungskriteriums ergibt.

4. Anordnung nach einem der Ansprüche 2 bis 3, **dadurch gekennzeichnet, dass** die Energieversorgungseinrichtung (8) dazu eingerichtet ist, das Steuergerät (4) bzw. die mit dem Steuergerät (4) verbundenen elektrischen Komponenten (40, 41, 42, 43) automatisch nicht über den Versorgungsausgangsanschluss (84) mit über den Batterieanschluss (86) aus der Batterie (5) entnommener elektrischer Versorgungsenergie zu versorgen, wenn die Überwachung der über den Versorgungseingangsanschluss (82) zugeführten elektrischen Versorgungsenergie die Nichterfüllung des vorbestimmten ersten Überwachungskriteriums oder die Erfüllung eines zweiten Überwachungskriteriums ergibt.

5. Anordnung nach einem der Ansprüche 2 bis 4, **dadurch gekennzeichnet, dass** das erste Überwachungskriterium die Unterschreitung eines bestimmten Grenzwerts des über den Versorgungseingangsanschluss (82) zugeführten Spannungspotentials ist.

6. Anordnung nach einem der Ansprüche 2 bis 5 mit den Merkmalen:
a) die Energieversorgungseinrichtung (8) weist wenigstens einen Steuereingangsanschluss (81) auf, über den der Energieversorgungseinrichtung (8) Aktivierungssignale zuführbar sind, wobei die Energieversorgungseinrichtung (8) zur Überwachung der über den Steuereingangsanschluss (81) zugeführten Aktivierungssignale eingerichtet ist,
b) die Energieversorgungseinrichtung (8) ist dazu eingerichtet, das Steuergerät (4) bzw. die mit dem Steuergerät (4) verbundenen elektrischen Komponenten (40, 41, 42, 43) automatisch erst dann über den Versorgungsausgangsanschluss (84) mit über den Batterieanschluss (86) aus der Batterie (5) entnommener elektrischer Versorgungsenergie zu versorgen, wenn die Überwachung der über den Versorgungseingangsanschluss (82) zugeführten elektrischen Versorgungsenergie die Erfüllung wenigstens eines vorbestimmten ersten Überwachungskriteriums ergibt und die Überwachung des Steuereingangsanschlusses (81) das Vorliegen wenigstens eines vorbestimmten ersten Aktivierungssignals ergibt.

7. Anordnung nach Anspruch 6, **dadurch gekennzeichnet, dass** die Energieversorgungseinrichtung (8) dazu eingerichtet ist, das Steuergerät (4) bzw. die mit dem Steuergerät (4) verbundenen elektrischen Komponenten (40, 41, 42, 43) automatisch nicht über den Versorgungsausgangsanschluss (84) mit über den Batterieanschluss (86) aus der Batterie (5) entnommener elektrischer Versorgungsenergie zu versorgen, wenn die Überwachung des Steuereingangsanschlusses (81) das Nichtvorliegen des vorbestimmten ersten Aktivierungssignals ergibt.

8. Anordnung nach einem der Ansprüche 2 bis 7, **dadurch gekennzeichnet, dass** die Energieversorgungseinrichtung (8) zusätzlich einen Zusatzanschluss (83, 95) aufweist, über den der Energieversorgungseinrichtung (8) Energieanforderungssignale zuführbar sind, wobei die Energieversorgungseinrichtung (8) zur Überwachung der über den Zusatzanschluss (83, 95) zugeführten Energieanforderungssignale eingerichtet ist, und dass die Energieversorgungseinrichtung (8) dazu eingerichtet ist, automatisch das Steuergerät (4) bzw. die mit dem Steuergerät (4) verbundenen elektrischen Komponenten (40, 41, 42, 43) über den Versorgungsausgangsanschluss (84) mit über den Batterieanschluss (86) aus der Batterie (5) entnommener elektrischer Versorgungsenergie zu versorgen, wenn die Überwachung des Zusatzanschlusses (83, 95) das Vorliegen wenigstens eines vorbestimmten ersten Energieanforderungssignals ergibt.

9. Anordnung nach Anspruch 8, **dadurch gekennzeichnet, dass** der Zusatzanschluss (83, 95) als Bedienelementanschluss (83) ausgebildet ist oder diesen aufweist, wobei der Bedienelementanschluss (83) zur Verbindung mit einem manuellen Bedienelement (7) eingerichtet ist.

10. Anordnung nach einem der Ansprüche 8 bis 9, **dadurch gekennzeichnet, dass** die Energieversorgungseinrichtung (8) dazu eingerichtet ist, nach Ablauf einer vorbestimmten Zusatzzeit automatisch das Steuergerät (4) bzw. die mit dem Steuergerät (4) verbundenen elektrischen Komponenten (40, 41, 42, 43) nicht mit über den Batterieanschluss (86) aus der Batterie (5) entnommener elektrischer Versorgungsenergie zu versorgen.

11. Anordnung nach einem der Ansprüche 2 bis 10, **dadurch gekennzeichnet, dass** der Versorgungseingangsanschluss (82) mit dem Versorgungsausgangsanschluss (84) zusammengeschaltet ist oder als der gleiche Anschluss ausgebildet ist.

12. Anordnung nach einem der Ansprüche 2 bis 11, **dadurch gekennzeichnet, dass** die Energieversorgungseinrichtung (8) wenigstens ein Überspannungsschutzbauteil (87) aufweist, das an den Versorgungseingangsanschluss (82) angeschlossen ist und dazu eingerichtet ist, die elektronischen Komponenten (92) der Energieversorgungseinrichtung (8) vor Überspannungspulsen aus der elektrischen Anlage des Zugfahrzeugs (1) zu schützen, insbesondere vor durch den Generator erzeugten Überspannungspulsen.

13. Anordnung nach einem der vorhergehenden Ansprüche, **dadurch gekennzeichnet, dass** die Energieversorgungseinrichtung (8) eine Batterieladeschaltung (6) aufweist, wobei die Energieversorgungseinrichtung (8) dazu eingerichtet ist, die Batterie (5) über die an dem Versorgungseingangsanschluss (82) empfangene elektrische Versorgungsenergie mittels der Batterieladeschaltung (6) zu laden, wenn wenigstens ein vorbestimmtes Ladekriterium erfüllt ist.

14. Anordnung nach Anspruch 13, **dadurch gekennzeichnet, dass** das vorbestimmte Ladekriterium die Überschreitung eines bestimmten Werts des über den Versorgungseingangsanschluss (82) zugeführten Spannungspotentials ist.

15. Anordnung nach einem der vorhergehenden Ansprüche, **dadurch gekennzeichnet, dass** das elektronische Steuergerät (4) elektrisch zwischen der elektrischen Steckverbindung (3) des Nutzfahrzeuganhängers (2), die zum Anschluss an das Zugfahrzeug (1) des Nutzfahrzeuganhängers (2) ausgebildet ist, und der Energieversorgungseinrichtung (8) geschaltet ist, wobei die Energieversorgungseinrichtung (8) mit wenigstens einer Leitung (30) der elektrischen Steckverbindung (3), die elektrische Versorgungsenergie vom Zugfahrzeug (1) zum Nutzfahrzeuganhänger (2) überträgt, mittelbar über den Energieversorgungsausgangsanschluss (44) des elektronischen Steuergeräts (4) verbunden ist.

16. Anordnung nach einem der vorhergehenden Ansprüche, **dadurch gekennzeichnet, dass** der Energieversorgungsausgangsanschluss (44) des elektronischen Steuergeräts (4) über wenigstens eine in dem elektronischen Steuergerät (4) angeordnete Ausgangsstufe (50) mit dem Energieversorgungseingangsanschluss (39) des elektronischen Steuergeräts (4) abschaltbar verbunden ist, wobei die Verbindung durch die Ausgangsstufe (50) oder ein anderes abschaltbares Schaltungsbauelement des elektronischen Steuergeräts (4) abschaltbar ist.

17. Nutzfahrzeuganhänger (2) mit einer Anordnung nach einem der vorhergehenden Ansprüche.

18. Elektronisches Steuergerät (4) einer elektrisch gesteuerten Bremsanlage und/oder Niveauregelungsanlage eines Nutzfahrzeuganhängers (2), ausgebildet für eine Anordnung nach einem der Ansprüche 1 bis 16.

19. Energieversorgungseinrichtung (8) eines Nutzfahrzeuganhängers (2), ausgebildet für eine Anordnung nach einem der Ansprüche 1 bis 16, wobei die Energieversorgungseinrichtung (8) einen Energieversorgungsausgangsanschluss (84) aufweist, über den in einem zweiten Betriebsmodus das elektronische Steuergerät (4) in Energieflussrichtung von der Energieversorgungseinrichtung (8) zu dem elektronischen Steuergerät (4) durch die Energieversorgungseinrichtung (8) mit Strom versorgbar ist, **dadurch gekennzeichnet, dass** die Energieversorgungseinrichtung (8) einen Energieversorgungseingangsanschluss (82) aufweist, über den die Energieversorgungseinrichtung (8) in einem ersten Betriebsmodus in Energieflussrichtung von dem elektronischen Steuergerät (4) zu der Energieversorgungseinrichtung (8) mit Strom versorgbar ist, wobei Energieversorgungsausgangsanschluss (84) und Energieversorgungseingangsanschluss (82) einen gemeinsamen Anschluss der Energieversorgungseinrichtung (8) betreffen.

## Claims

1. Arrangement composed of an electronic control unit (4) of an electrically controlled brake system and/or ride level control system of a utility vehicle trailer (2) and of an energy supply device (8) of the utility vehicle trailer (2) for supplying electrical components (40, 41, 42, 43) of the utility vehicle trailer (2) with electrical energy, wherein the energy supply device (8) is configured to be carried along with the utility vehicle trailer (2), wherein in a first operating mode the electronic control unit (4) is configured to be supplied with electrical supply energy via an energy supply input connection (39) of the electronic control unit (4) via an electrical plug-type connection (3) of the utility vehicle trailer (2), which plug-type connection (3) is designed to connect to a tractor vehicle (1) of the utility vehicle trailer (2), and to supply the energy supply device (8) with electrical supply energy necessary for its operation via at least one energy supply output connection (44) of the electronic control unit (4), **characterized in that** the electronic control unit (4) is configured, in a second operating mode, to take up via the energy supply output connection (44) electrical supply energy which is made available by the energy supply device (8) from a battery (5) which is carried along with the utility vehicle trailer (2), in order to supply the electronic control unit (4) or the electrical components (40, 41, 42, 43) connected to the control unit, with electrical supply energy necessary for its operation.

2. Arrangement according to Claim 1 having the features:
a) the energy supply device (8) has at least one electrical supply output connection (84) which is configured to connect to the energy supply output connection (44) of the electronic control unit (4),
b) the energy supply device (8) has at least one electrical supply input connection (82) which is configured to connect to the energy supply output connection (44) of the electronic control unit (4), wherein the energy supply device (8) is configured to monitor the electrical supply energy fed in via the supply input connection (82),
c) the energy supply device (8) has at least one battery connection (86) which is configured to connect to at least one connection pole of a battery (5) which is carried along with the utility vehicle trailer (2),
d) the energy supply device (8) is configured to supply automatically the control unit (4) or the electrical components (40, 41, 42, 43) connected to the control unit via the supply output connection (84) with electrical supply energy extracted from the battery (5) via the battery connection (86), only if the monitoring of the electrical supply energy fed in via the supply input connection (82) reveals that at least one predetermined first monitoring criterion is satisfied.

3. Arrangement according to Claim 2, **characterized in that** the energy supply device (8) is configured not to continue automatically supplying the control unit (4) or the electrical components (40, 41, 42, 43) connected to the control unit (4) with electrical supply energy extracted from the battery (5) via the battery connection (86) after the expiry of a predetermined run-on time, wherein the run-on time starts when the monitoring of the electrical supply energy fed in via the supply input connection (82) reveals that the predetermined first monitoring criterion is satisfied.

4. Arrangement according to one of Claims 2 to 3, **characterized in that** the energy supply device (8) is configured not to supply automatically the control unit (4) or the electrical components (40, 41, 42, 43) connected to the control unit (4), via the supply output connection (84), with electrical supply energy extracted from the battery (5) via the battery connection (86) if the monitoring of the electrical supply energy fed in via the supply input connection (82) reveals that the predetermined first monitoring criterion is not satisfied or that a second monitoring criterion is satisfied.

5. Arrangement according to one of Claims 2 to 4, **characterized in that** the first monitoring criterion is the undershooting of a specific limiting value of the voltage potential fed in via the supply input connection (82).

6. Arrangement according to one of Claims 2 to 5, having the features:
a) the energy supply device (8) has at least one control input connection (81) via which activation signals can be fed to the energy supply device (8), wherein the energy supply device (8) is configured to monitor the activation signals fed in via the control input connection (81),
b) the energy supply device (80) is configured to supply automatically the control unit (4) or the electrical components (40, 41, 42, 43) connected to the control unit (4), via the supply output connection (84), with electrical supply energy extracted from the battery (5) via the battery connection (86), only if the monitoring of the electrical supply energy fed in via the supply input connection (82) reveals that at least one predetermined first monitoring criterion is satisfied and the monitoring of the control input connection (81) reveals the presence of at least one predetermined first activation signal.

7. Arrangement according to Claim 6, **characterized in that** the energy supply device (8) is configured not to supply automatically the control unit (4) or the electrical components (40, 41, 42, 43) connected to the control unit (4), via the supply output connection (84), with electrical supply energy extracted from the battery (5) via the battery connection (86), if the monitoring of the control input connection (81) reveals that the predetermined first activation signal is not present.

8. Arrangement according to one of Claims 2 to 7, **characterized in that** the energy supply device (8) additionally has an additional connection (83, 95) via which energy request signals can be fed to the energy supply device (8), wherein the energy supply device (8) is configured to monitor the energy request signals fed in via the additional connection (83, 95), and **in that** the energy supply device (8) is configured to supply automatically the control unit (4) or the electrical components (40, 41, 42, 43) connected to the control unit (4), via the supply output connection (84), with electrical supply energy extracted from the battery (5) via the battery connection (86) if the monitoring of the additional connection (83, 95) reveals that at least one predetermined first energy request signal is present.

9. Arrangement according to Claim 8, **characterized in that** the additional connection (83, 95) is embodied as an operator control element connection (83) or has such a connection, wherein the operator control element connection (83) is configured to connect to a manual operator control element (7).

10. Arrangement according to one of Claims 8 to 9, **characterized in that** the energy supply device (8) is configured automatically not to supply the control unit (4) or the electrical components (40, 41, 42, 43) connected to the control unit (4) with electrical supply energy extracted from the battery (5) via the battery connection (86), after the expiry of a predetermined additional time.

11. Arrangement according to one of Claims 2 to 10, **characterized in that** the supply input connection (82) is connected to the supply output connection (84) or is embodied as the same connection.

12. Arrangement according to one of Claims 2 to 11, **characterized in that** the energy supply device (8) has at least one overvoltage arrester (87) which is connected to the supply input connection (82) and is configured to protect the electronic components (92) of the energy supply device (8) from overvoltage surges from the electrical system of the tractor vehicle (1), in particular from overvoltage surges which are generated by the generator.

13. Arrangement according to one of the preceding claims, **characterized in that** the energy supply device (8) has a battery-charging circuit (6), wherein the energy supply device (8) is configured to charge the battery (5) by means of the battery-charging circuit (6), using the electrical supply energy received at the supply input connection (82), if at least one predetermined charging criterion is satisfied.

14. Arrangement according to Claim 13, **characterized in that** the predetermined charging criterion is the exceeding of a specific value of the voltage potential fed in via the supply input connection (82) .

15. Arrangement according to one of the preceding claims, **characterized in that** the electronic control unit (4) is connected electrically between the electrical plug-type connection (3) of the utility vehicle trailer (2), which plug-type connection (3) is designed to connect to the tractor vehicle (1) of the utility vehicle trailer (2), and the energy supply device (8), wherein the energy supply device (8) is connected to at least one line (30) of the electrical plug-type connection (3), which transmits electrical supply energy from the tractor vehicle (1) to the utility vehicle trailer (2), indirectly via the energy supply output connection (44) of the electronic control unit (4).

16. Arrangement according to one of the preceding claims, **characterized in that** the energy supply output connection (44) of the electronic control unit (4) is connected, in such a way that it can be switched off, to the energy supply input connection (39) of the electronic control unit (4) via at least one output stage (50) which is arranged in the electronic control unit (4), wherein the connection can be switched off by means of the output stage (50) or some other circuit component, which can be switched off, of the electronic control unit (4).

17. Utility vehicle trailer (2) having an arrangement according to one of the preceding claims.

18. Electronic control unit (4) of an electrically controlled brake system and/or ride level control system of a utility vehicle trailer (2), designed for an arrangement according to one of Claims 1 to 16.

19. Energy supply device (8) of a utility vehicle trailer (2), designed for an arrangement according to one of Claims 1 to 16, wherein the energy supply device (8) has an energy supply output connection (84) via which, in a second operating mode, the electronic control unit (4) can be supplied with current by the energy supply device (8), in a direction of flow of energy from the energy supply device (8) to the electronic control unit (4), **characterized in that** the energy supply device (8) has an energy supply input connection (82) via which in a first operating mode the energy supply device (8) can be supplied with current in a direction of flow of energy from the electronic control unit (4) to the energy supply device (8), wherein energy supply output connection (84) and energy supply input connection (82) relate to a common connection of the energy supply device (8).

## Revendications

1. Agencement composé d'un appareil de commande électronique (4) d'un système de freinage à commande électrique et/ou d'un système de régulation de niveau d'une remorque de véhicule utilitaire (2) et d'un dispositif d'alimentation en énergie (8) de la remorque de véhicule utilitaire (2) pour alimenter en énergie électrique des composants électriques (40, 41, 42, 43) de la remorque de véhicule utilitaire (2), le dispositif d'alimentation en énergie (8) étant conçu pour être embarqué sur la remorque de véhicule utilitaire (2), dans lequel l'appareil de commande électronique (4), dans un premier mode de fonctionnement, est conçu pour être alimenté en énergie d'alimentation électrique par une borne d'entrée d'alimentation en énergie (39) de l'appareil de commande électronique (4) par un connecteur électrique (3) de la remorque de véhicule utilitaire (2) qui est réalisé pour la connexion à un véhicule tracteur (1) de la remorque de véhicule utilitaire (2) et pour alimenter par au moins une borne de sortie d'alimentation en énergie (44) de l'appareil de commande électronique (4) le dispositif d'alimentation en énergie (8) en énergie d'alimentation électrique nécessaire à son fonctionnement, **caractérisé en ce que** l'appareil de commande électronique (4), dans un deuxième mode de fonctionnement, est conçu pour absorber de l'énergie d'alimentation électrique fournie par le dispositif d'alimentation en énergie (8) à partir d'une batterie (5) embarquée sur la remorque de véhicule utilitaire (2) par la borne de sortie d'alimentation en énergie (44) afin d'alimenter l'appareil de commande électronique (4) ou les composants électriques (40, 41, 42, 43) reliés à l'appareil de commande électronique en énergie d'alimentation électrique nécessaire à leur fonctionnement.

2. Agencement selon la revendication 1, ayant les particularités suivantes :
a) le dispositif d'alimentation en énergie (8) présente au moins une borne de sortie d'alimentation électrique (84) qui est conçue pour être reliée à la borne de sortie d'alimentation en énergie (44) de l'appareil de commande électronique (4),
b) le dispositif d'alimentation en énergie (8) présente au moins une borne d'entrée d'alimentation électrique (82) qui est conçue pour être reliée à la borne de sortie d'alimentation en énergie (44) de l'appareil de commande électronique (4), le dispositif d'alimentation en énergie (8) étant conçu pour surveiller l'énergie d'alimentation électrique amenée par la borne d'entrée d'alimentation (82),
c) le dispositif d'alimentation en énergie (8) présente au moins une borne de batterie (86) qui est conçue pour être reliée à au moins un pôle de connexion d'une batterie (5) embarquée sur la remorque de véhicule utilitaire (2),
d) le dispositif d'alimentation en énergie (8) est conçu pour alimenter automatiquement l'appareil de commande (4) ou les composants électriques (40, 41, 42, 43) reliés à l'appareil de commande par la borne de sortie d'alimentation (84) en énergie d'alimentation électrique prélevée sur la batterie (5) par la borne de batterie (86) seulement si la surveillance de l'énergie d'alimentation électrique amenée par la borne d'entrée d'alimentation (82) indique le respect d'au moins un premier critère de surveillance prédéterminé.

3. Agencement selon la revendication 2, **caractérisé en ce que** le dispositif d'alimentation en énergie (8) est conçu, après expiration d'un temps de poursuite prédéterminé, pour automatiquement ne plus alimenter l'appareil de commande (4) ou les composants électriques (40, 41, 42, 43) reliés à l'appareil de commande (4) en énergie d'alimentation électrique prélevée sur la batterie (5) par la borne de batterie (86), le temps de poursuite commençant lorsque la surveillance de l'énergie d'alimentation électrique amenée par la borne d'entrée d'alimentation (82) indique le respect du premier critère de surveillance prédéterminé.

4. Agencement selon l'une quelconque des revendications 2 à 3, **caractérisé en ce que** le dispositif d'alimentation en énergie (8) est conçu pour automatiquement ne pas alimenter l'appareil de commande (4) ou les composants électriques (40, 41, 42, 43) reliés à l'appareil de commande (4) en énergie d'alimentation électrique prélevée sur la batterie (5) par la borne de batterie (86) si la surveillance de l'énergie d'alimentation électrique amenée par la borne d'entrée d'alimentation (82) indique le non-respect du premier critère de surveillance prédéterminé ou le respect d'un deuxième critère de surveillance.

5. Agencement selon l'une quelconque des revendications 2 à 4, **caractérisé en ce que** le premier critère de surveillance est le soupassement d'une certaine valeur limite du potentiel de tension amené par la borne d'entrée d'alimentation (82).

6. Agencement selon l'une quelconque des revendications 2 à 5, ayant les particularités suivantes :
a) le dispositif d'alimentation en énergie (8) présente au moins une borne d'entrée de commande (81) par laquelle des signaux d'activation peuvent être amenés au dispositif d'alimentation en énergie (8), le dispositif d'alimentation en énergie (8) étant conçu pour surveiller les signaux d'activation amenés par la borne d'entrée de commande (81),
b) le dispositif d'alimentation en énergie (8) est conçu pour automatiquement alimenter l'appareil de commande (4) ou les composants électriques (40, 41, 42, 43) reliés à l'appareil de commande (4) par la borne de sortie d'alimentation (84) en énergie d'alimentation électrique prélevée sur la batterie (5) par la borne de batterie (86) seulement si la surveillance de l'énergie d'alimentation électrique amenée par la borne d'entrée d'alimentation (82) indique le respect d'au moins un premier critère de surveillance prédéterminé et la surveillance de la borne d'entrée de commande (81) indique la présence d'au moins un premier signal d'activation prédéterminé.

7. Agencement selon la revendication 6, **caractérisé en ce que** le dispositif d'alimentation en énergie (8) est conçu pour automatiquement ne pas alimenter l'appareil de commande (4) ou les composants électriques (40, 41, 42, 43) reliés à l'appareil de commande (4) par la borne de sortie d'alimentation (84) en énergie d'alimentation électrique prélevée sur la batterie (5) par la borne de batterie (86) si la surveillance de la borne d'entrée de commande (81) indique l'absence du premier signal d'activation prédéterminé.

8. Agencement selon l'une quelconque des revendications 2 à 7, **caractérisé en ce que** le dispositif d'alimentation en énergie (8) présente en outre une borne auxiliaire (83, 95) par laquelle des signaux de demande d'énergie peuvent être amenés au dispositif d'alimentation en énergie (8), le dispositif d'alimentation en énergie (8) étant conçu pour surveiller les signaux de demande d'énergie amenés par la borne auxiliaire (83, 95), et
**en ce que** le dispositif d'alimentation en énergie (8) est conçu pour automatiquement alimenter l'appareil de commande (4) ou les composants électriques (40, 41, 42, 43) reliés à l'appareil de commande (4) par la borne de sortie d'alimentation (84) en énergie d'alimentation électrique prélevée sur la batterie (5) par la borne de batterie (86), si la surveillance de la borne auxiliaire (83, 95) indique la présence d'au moins un premier signal de demande d'énergie prédéterminé.

9. Agencement selon la revendication 8, **caractérisé en ce que** la borne auxiliaire (83, 95) est réalisée comme, ou présente, une borne d'élément de commande (83), la borne d'élément de commande (83) étant conçue pour être reliée à un élément de commande manuelle (7).

10. Agencement selon l'une quelconque des revendications 8 à 9, **caractérisé en ce que** le dispositif d'alimentation en énergie (8) est conçu, après expiration d'un temps supplémentaire prédéterminé, pour automatiquement ne pas alimenter l'appareil de commande (4) ou les composants électriques (40, 41, 42, 43) reliés à l'appareil de commande (4) en énergie d'alimentation électrique prélevée sur la batterie (5) par la borne de batterie (86) .

11. Agencement selon l'une quelconque des revendications 2 à 10, **caractérisé en ce que** la borne d'entrée d'alimentation (82) est interconnectée avec la borne de sortie d'alimentation (84) ou est réalisée comme la même borne.

12. Agencement selon l'une quelconque des revendications 2 à 11, **caractérisé en ce que** le dispositif d'alimentation en énergie (8) présente au moins un composant coupe-circuit de surtension (87) qui est connecté à la borne d'entrée d'alimentation (82) et est conçu pour protéger les composants électroniques (92) du dispositif d'alimentation en énergie (8) des impulsions de surtension provenant du système électrique du véhicule tracteur (1), en particulier des impulsions de surtension produites par le générateur.

13. Agencement selon l'une quelconque des revendications précédentes, **caractérisé en ce que** le dispositif d'alimentation en énergie (8) présente un circuit de charge de batterie (6), le dispositif d'alimentation en énergie (8) étant conçu pour charger la batterie (5) avec l'énergie d'alimentation électrique reçue par la borne d'entrée d'alimentation (82) au moyen du circuit de charge de batterie (6) si au moins un critère de charge prédéterminé est respecté.

14. Agencement selon la revendication 13, **caractérisé en ce que** le critère de charge prédéterminé est le dépassement d'une certaine valeur du potentiel de tension amené par la borne d'entrée d'alimentation (82) .

15. Agencement selon l'une quelconque des revendications précédentes, **caractérisé en ce que** l'appareil de commande électronique (4) est connecté électriquement entre le connecteur électrique (3) de la remorque de véhicule utilitaire (2), qui est réalisé pour être connecté au véhicule tracteur (1) de la remorque de véhicule utilitaire (2), et le dispositif d'alimentation en énergie (8), le dispositif d'alimentation en énergie (8) étant relié indirectement par la borne de sortie d'alimentation en énergie (44) de l'appareil de commande électronique (4) à au moins une ligne (30) du connecteur électrique (3) qui transmet l'énergie d'alimentation électrique du véhicule tracteur (1) à la remorque de véhicule utilitaire (2).

16. Agencement selon l'une quelconque des revendications précédentes, **caractérisé en ce que** la borne de sortie d'alimentation en énergie (44) de l'appareil de commande électronique (4) est reliée de manière déconnectable par au moins un étage de sortie (50) disposé dans l'appareil de commande électronique (4) à la borne d'entrée d'alimentation en énergie (39) de l'appareil de commande électronique (4), la liaison pouvant être déconnectée par l'étage de sortie (50) ou un autre composant de circuit déconnectable de l'appareil de commande électronique (4).

17. Remorque de véhicule utilitaire (2) comprenant un agencement selon l'une quelconque des revendications précédentes.

18. Appareil de commande électronique (4) d'un système de freinage à commande électrique et/ou d'un système de régulation de niveau d'une remorque de véhicule utilitaire (2), réalisé pour un agencement selon l'une quelconque des revendications 1 à 16.

19. Dispositif d'alimentation en énergie (8) d'une remorque de véhicule utilitaire (2), réalisé pour un agencement selon l'une quelconque des revendications 1 à 16, dans lequel le dispositif d'alimentation en énergie (8) présente une borne de sortie d'alimentation en énergie (84) par laquelle, dans un deuxième mode de fonctionnement, l'appareil de commande électronique (4) peut être alimenté en courant par le dispositif d'alimentation en énergie (8) dans la direction de flux énergétique allant du dispositif d'alimentation en énergie (8) à l'appareil de commande électronique (4), **caractérisé en ce que** le dispositif d'alimentation en énergie (8) présente une borne d'entrée d'alimentation en énergie (82) par laquelle, dans un premier mode de fonctionnement, le dispositif d'alimentation en énergie (8) peut être alimenté en courant dans la direction de flux énergétique allant de l'appareil de commande électronique (4) au dispositif d'alimentation en énergie (8), la borne de sortie d'alimentation en énergie (84) et la borne d'entrée d'alimentation en énergie (82) concernant une borne commune du dispositif d'alimentation en énergie (8).
